# EUROPEAN PATENT SPECIFICATION

(11) **EP 1 750 253 B1**
(45) Date of publication and mention of the grant of the patent: **21.03.2012**
(21) Application number: 05016999.4
(22) Date of filing: 04.08.2005
(51) Int. Cl.: G10L 15/28, H04M 3/493

(54) **Speech dialog system**
Sprachdialogsystem
Système de dialogue vocal

(43) Date of publication of application: 07.02.2007
(73) Proprietor: Nuance Communications, Inc., Burlington, MA 01803-4613 (US)
(72) Inventor: Schedl, Manfred, 87471 Durach (DE)
(74) Representative: Grünecker, Kinkeldey, Stockmair & Schwanhäusser

(56) References cited:
- WO-A-01/50453
- US-A1- 2002 108 122
- US-A1- 2003 007 609
- US-A1- 2003 088 421
- US-B1- 6 839 748

## Description

### Field of Invention

The present invention relates to a speech dialog system for realizing an interaction between a human speaker and a computational system. More particular, the invention relates to a high degree of integration of multiple components of a speech dialog system that is largely independent of the actual platform.

### Prior Art

The human voice can probably be considered as the most natural and comfortable man-computer interface. Voice input provides the advantages of hands-free operation, thereby, e.g., providing access for physically challenged users, and also of avoiding problems of learning an abstract computational syntax. Thus, computer users for a long time desired software applications that can be operated by verbal utterances.

In particular, due to the recent improvements of the computer capacities, e.g. regarding computing power and memory, on the one hand and theoretical speech analysis on the other hand, the development of speech dialog systems has been advanced considerably. Speech dialog systems are incorporated in multi-media systems that input, output and process speech, sounds, characters, numbers, graphics, images etc.

A basic element of spoken language input for a computer operation is speech recognition, i.e. the conversion of a speech signal to the corresponding orthographic representation by a set of words. The recognized words and sentences can be the final results, as for applications such as commands and data entry, or can serve as the input for further linguistic processing. Development has been made from isolated word recognition to continuous word recognition employing statistical language models.

As for the output task of speech dialog systems, some development has been made from straightforward text-to-speech dialog systems to elaborated speech synthesis means that even take into account individual intonation.

Conventional speech dialog systems have been designed as plain combinations of separately developed components as speech recognition and speech synthesis. Additionally, and partly as a consequence of the low degree of integration of the several components, existing speech dialog systems are bound to specific platforms and exhibit an undesirable diversity of different interfaces.

For example, the Speech Application Program Interface (SAPI) provided by Microsoft, Inc. is bound to the Microsoft Operating System. The alternative development JAVA SAPI allows the programmer to ignore platform dependent issues such as audio recording speech as well as recognizer specifics and provides speech recognition on multiple platforms, but all this only, provided a particular speech server runs in the background. No component to control the operation by some parametric dependence is included.

US 2003/088421 discloses systems and methods for conversational computing and, in particular, to systems and methods for building distributed conversational applications using a Web services-based model wherein speech engines (e.g., speech recognition) and audio I/O systems are programmable services that can be asynchronously programmed by an application using a standard, extensible SERCP (speech engine remote control protocol), to thereby provide scalable and flexible IP-based architectures that enable deployment of the same application or application development environment across a wide range of voice processing platforms and networks/gateways (e.g., PSTN (public switched telephone network), Wireless, Internet, and VoIP (voice over IP)).

It is therefore the problem underlying the present invention to provide a speech dialog system that overcomes the drawbacks of the prior art and that, in particular, shows a high portability and degree of integration of the several components. Also, the desired system should show a high degree of functional extensionality and an easy connectivity to target systems.

### Description of the Invention

The above-mentioned problem is solved by a speech dialog system according to claim 1 and a method for running a speech dialog system according to claim 9.

The Speech Application Manager (SAM) is the main control unit of the speech dialog system and comprises a service registry containing information about the operation of the employed services. In particular, the SAM controls the coordinated startup and shutdown operations of all registered services.

The services of the speech dialog system are divided into several units or components. A speech or voice recognition means represents an essential component necessary to control some application device via the speech dialog system by a verbal utterance of a user. Several other services represented by service components are mentioned below.

The data exchange between the service components as well as between the service components and the SAM is provided by a Message Router. The service components desirably make use of standardized uniform and open interfaces and communication protocols. The speech dialog system can, thus, readily be extended by further components.

The Message Router receives, e.g., a message or data from one system component and republishes it to a different message channel depending on a set of conditions.

The Message Router differs from the most basic notion of pipes and filters in that it connects to multiple output channels. A key property of the Message Router is that it does not modify the message contents, but it concerns itself with the destination of the message.

The Platform Abstraction Layer (PAL) represents a key system component of the inventive speech dialog system. The PAL communicates between the kernel of the speech dialog system, i.e. the internal operating units as the service components, and, e.g., some operating system and device drivers employed on some hardware platform.

In other words, the PAL allows for a convenient and simple adaptation of the speech dialog system to an arbitrary target system. Adaptation of the speech dialog system to the software of the target system etc. is exclusively achieved by proper modifications of the PAL.

The PAL allows to connect the speech dialog system to arbitrary bus architectures as, e.g., CAN, MOST, lbus and D2B and for implementation of communication protocols including TCP/IP, Bluetooth, GSM.

Different classes of devices can be called from the speech dialog system by means of the PAL, e.g., memory, data ports, audio and video outputs, in general, switches, and buttons.

The inventive speech dialog system multiplexes all service components for, e.g., speech recognition, speech input/output and control of the speech dialog. In particular, the PAL represents an abstract singular and adaptable interface to an arbitrary target system.

The PAL guarantees a high portability and degree of integration of the several components as well as a high degree of functional extensionality and easy connectivity to target systems. Thanks to the PAL, any implementation of the speech dialog system, depends neither on the operating system nor on the hardware architecture of the target system.

Preferably, the Message Router may route the data between the different system components in a Generic Communication Format. The term Generic Communication Format (GCF) refers to a format that is completely independent of the data format of the target system. Usage of one single data format for the messages to be communicated between the several system components makes the speech dialog system to work efficiently and robust and contributes significantly to the multiplexing of the different services. The data format of the Message Router may also desirably be extensible.

The speech dialog system may comprise a voice detection means and/or a voice prompting means and/or a text synthesis means and/or a voice recorder and/or a spell matcher and/or a configuration database including configuration files of all service components, and/or a debugging means, which is of importance in the context of an optional speech development component (see below), and/or a Dialog Manager. The customer programmer's interface allows for simply connecting customer services to the Message Router of the speech dialog system. The connection is established by mapping the data format employed by the Message Router , i.e. the GCF interface, to the customer system application.

The speech dialog system can also provide a development environment, in particular, for developing speech dialogs. A speech development environment allows for defining, compiling, implementing and managing of speech dialog designs. As a data transport channel to and from the host development tool, e.g., TCP/IP may be chosen. A separately provided debugging means may be adapted to a customer development environment. The development environment may comprise a graphical interface to facilitate the effective development of new speech dialogs.

The speech dialog system can also provide a simulation environment for simulating applications and/or devices actually run or controlled and/or planned to be run or controlled by the speech dialog system, as, e.g., audio devices like a tuner or a CD player. When developing new speech dialogs for controlling components to be added in the future simulating these component can effectively assist the developer. Data and/or control conflict, e.g., can be identified and solved before the envisaged application is realized physically.

The graphical development environment may be configured to integrate the speech dialog system without any modifications of this system (single source principle). Thus, an embodiment of speech dialog system that not only comprises a development environment but also a simulation environment can readily be used to simulate the newly designed speech dialogs.

After the simulation of a new service to be incorporated in the speech dialog system exhibits desired results, the respective new service component van be integrated replacing the simulated virtual one.

During the development of a new speech dialog, e.g., to control a new device by speech input, the speech dialog system is entirely functional and the developing process can be performed continuously. Thus, rapid prototyping and subsequent seamless migration to the customer's system are made possible.

Different kinds of application means may be included in the speech dialog system. Typical application means may be telephone dialers and means to look up information in tables, books etc. which may be parts of system for providing time table information for airlines or trains, for example. In addition, mechanical devices controlled via the speech dialog system by speech input represent possible applications.

It is also provided use of one of the above described speech dialog systems in a vehicle, in particular, in an automobile. Arbitrary car data buses may be connected to the speech dialog system via the PAL.

Usage of embodiments of the speech dialog system in a vehicle allows the driver to operate several devices of the vehicle simply by speaking. Moreover, phone functions can be accessed via the speech dialog system, like recalling stored numbers and dialing. If the vehicle is equipped with a navigation system, one of the embodiments of the above described speech dialog system may be integrated in the navigation system.

The data that is exchanged by the Message Router may be formatted in one single Generic Communication Format.

The method may further comprise detecting and processing a speech signal, generating output data on the basis of the analysis of the processed speech signal, routing the output data to an application means to execute an application with the routing being mediated by the Platform Abstraction Layer.

The processing of the speech signal may comprise converting the speech signal into a feature vector and/or speech recognizing and/or spell matching and/or speech recording. Feature vectors comprise parameters relevant for speech analysis and synthesis and may consist of cepstral or predictor coefficients.

The output data may comprise at least one synthesized speech signal output by the speech dialog system.

The herein disclosed method may further comprise developing speech dialogs utilizing a development environment that represents one of the service components as well as simulating applications and/or devices actually run or controlled and/or planned to be run or controlled by the speech dialog system utilizing a simulation environment that represents one of the service components.

Additionally, it is provided a computer program product, comprising one or more computer readable media having computer-executable instructions for performing the steps of one of the above-mentioned embodiments of the disclosed method for running a speech dialog system.

Additional features and advantages of the present invention will be described with reference to the drawings. In the description, reference is made to the accompanying figures that are meant to illustrate preferred embodiments of the invention. It is understood that such embodiments do not represent the full scope of the invention that is defined by the claims given below.

Figure 1 illustrates the extensible architecture of the speech dialog system according to the present invention comprising an SAM, a Message Router and service components.

Figure 2 shows a block diagram of one example of the inventive speech dialog system comprising an SAM, a Message Router, service components and a PAL.

Figure 3 illustrates an advantageous embodiment of the inventive speech dialog system connected to the StarRec© Dialog Development Studio.

Figure 4 illustrates the adaptation of the Platform Abstraction Layer to a customer audio driver specification.

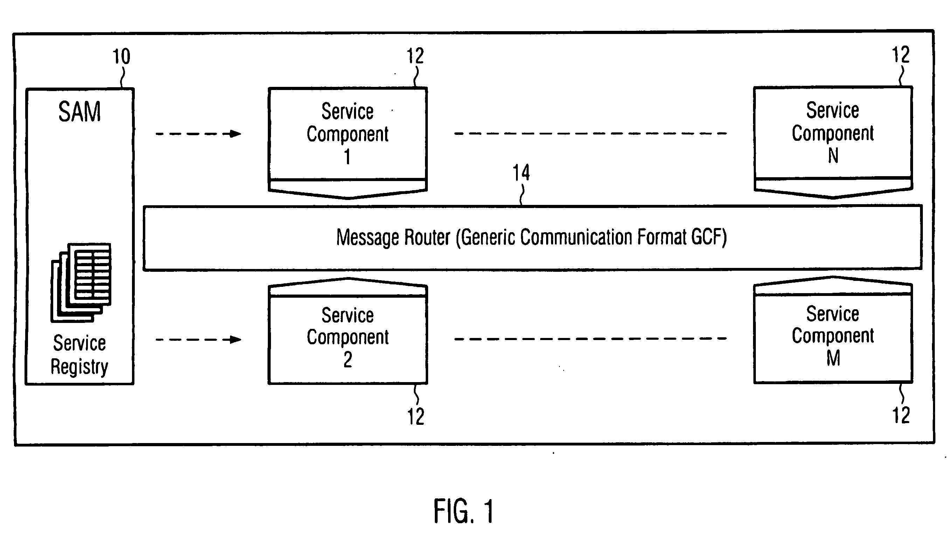

Figure 1 illustrates the extensible architecture of the inventive speech dialog system. Among other components the system comprises a Speech Application Manager (SAM) 10 and service components 12, numbered e.g., from 1 to M, as well as a Message Router 14 operating as a central message communicating unit providing the data exchange between the service components and the SAM. The communication between the several service components 12 and the SAM is carried out employing exclusively one single message format as a message protocol. Employment of a generic and extensible General Communication Format (GCF) that is independent of the target or customer system is of importance with respect to simple and economic modifications and adaptation to customer needs.

The service components 12, e.g., comprise means for speech detection, speech recording, speech recognition, speech synthesis, diagnosis as well as a customer interface. According to the extensible server concept underlying the present invention, further service components can easily be added without any necessity for modifying the kernel. Customer interfaces are regarded simply as additional service components integrated in the speech dialog system and also using the above mentioned message format. This format has only to be converted to the formats employed by the customers outside of the software kernel of the inventive system.

The speech dialog system is configured according to the user's intents by the SAM 10. Accordingly, the SAM 10 contains a service registry including the information that is necessary for the operation control, e.g. the addressing of the appropriate service components 12 with the associated databases. Moreover, the SAM 10 is responsible for a coordinated startup and shutdown of all registered service components 12.

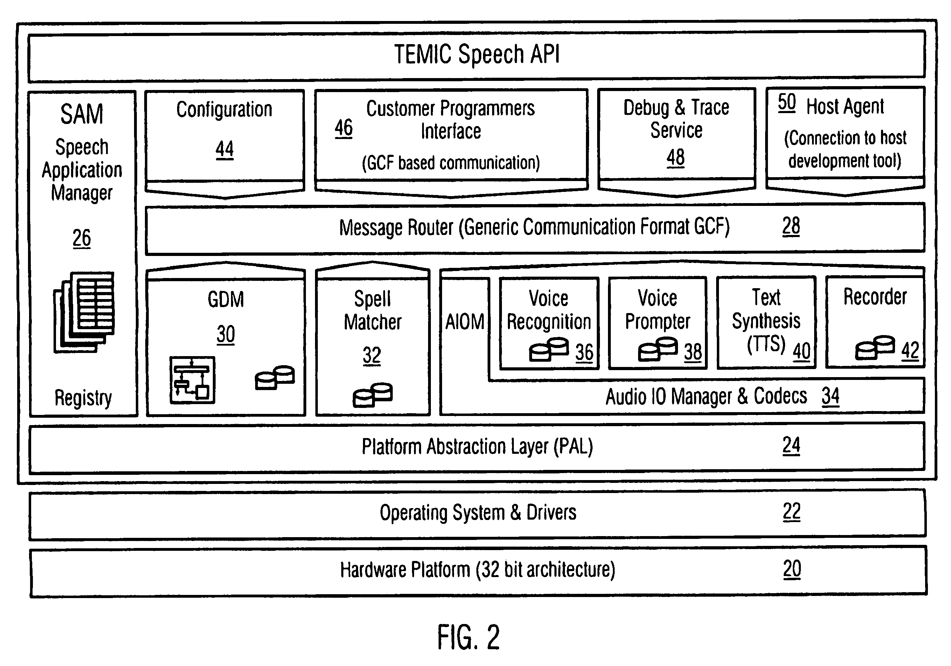

Figure 2 illustrates in some detail an example of the speech dialog system according to the present invention. The physical basis of the speech dialog system is provided by a hardware platform 20, which preferably, represents a 32 bit, e.g., a 32-bit RISC, platform. A 32-bit operating system (OS) and drivers 22 utilize the hardware platform 20.

The inventive system is designed for high portability to a great variety of target systems. For this purpose, a Platform Abstraction Layer (PAL) 24 plays an important role in the speech dialog system. All dependencies of software components of the speech dialog system on customer devices and needs, i.e. on envisaged target systems, are handled by the PAL 24 and thereby sourced out of the kernel of the inventive system. Adaptation to the target system is achieved by exclusively adapting the functions of the PAL 24 to the actual environment.

The abstraction from any dependencies on actually employed platforms together with the single generic message format allows the simple implementation of third party software. Integration of third party software is achieved by abstraction from the specific realization of the third party interfaces and mapping of the 3^{rd} party design to the interfaces and message format internally used by the inventive speech dialog system.

The software kernel of the speech dialog system comprises, as also shown in Figure 1, an SAM 26 and a Message Router 28 providing communication between the service components. According to Figure 2, the service components comprise a General Dialog Manager (GDM) 30 and a spell matcher 32.

The GDM 30, e.g., the StarRec© GDM, is a runtime component executing the dialog flow. Speech applications to be processed by the GDM dialog manager are encoded in the XML-based Generic Dialog Modeling Language (GDML). The GDML source files must be compiled with the GDC grammar compiler into a compact binary representation, which is interpreted by the GDM dialog management module during runtime.

The StarRec® GDM dialog manager is a virtual machine that interprets compiled GDML applications. It is available for a variety of 32bit RISC (Integer and/or Float) processors on the most common realtime operating systems. Supported operating systems include VxWorks, QNX, WinCE, and LINUX. Due to the platform-independent implementation of the StarRec® GDM software; porting to other target platforms may be realized readily.

Further, the service components comprise an Audio Input/Output Manager and Codecs 34 managing basic elements of the man-computer speech interaction as a voice recognition means 36, a voice prompter 38, a text synthesis means 40 and a voice recorder 42. The service components include appropriate databases.

The row displayed above Message Router 28 in Figure 2 represents the functionality of the Speech Application Programming Interface according to the present invention and it shows a service configuration means 44, a customer programmer's interface 46, a debug and trace service 48 and a host agent 50. The configuration means 44 provides a file based configuration of each service and is started by the SAM 26.

The customer interface 46 provides connection to the user's application. The connection is achieved by mapping the GCF string interface to a customer system application. The mapping to any other communication protocol outside the kernel can easily be done by a transport through transport channels, as e.g., TCP/IP, MOST, I2C; Message Queues etc. Thus, the customer application is simply connected to the Message Router 28.

The debug and trace service 48 and the host agent 50 provides an effective developing and debugging GCF interface for further developing the speech dialog system and/or integrating the target system. The StarRec© Dialog Development Studio may, e.g., be connected via the host agent 50 and employed for developing and debugging speech dialogs. Usage of, e.g., the StarRec© Dialog Development Studio allows the definition, compilation, implementation and administration of the speech dialog development by means of a graphical user interface.

The developed speech dialogs can, when performing successfully, be integrated in the speech dialog system without any conceptual modifications. In other words, the speech dialog system can be used for simulating the developed speech dialogs to be employed in customer's applications and components of the speech dialogs can subsequently be incorporated in the target system. In general, the inventive speech dialog system shows a cross development capability with a rapid prototyping and a seamless host - target integration.

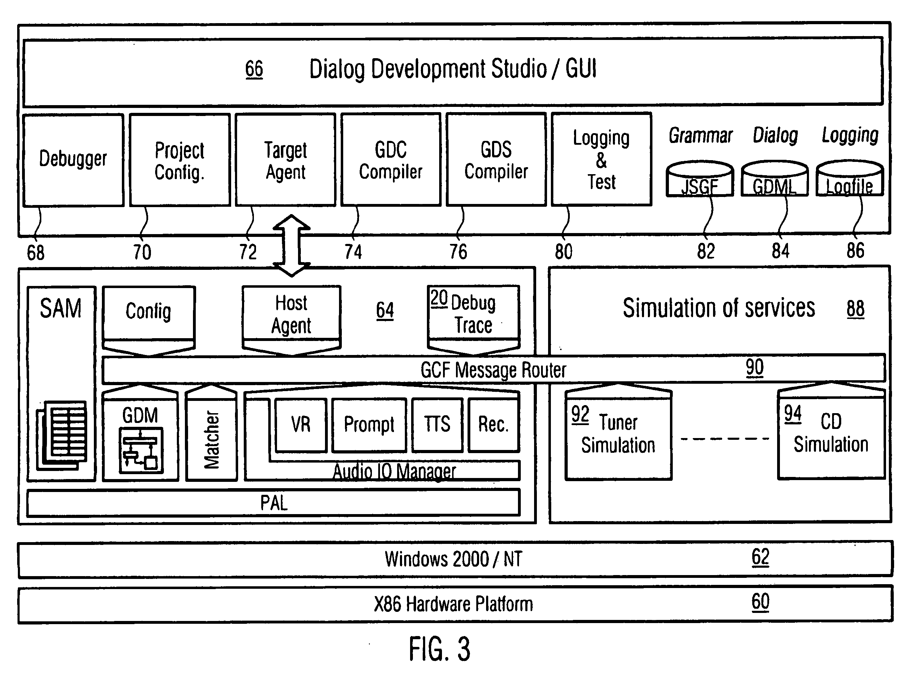

Figure 3 illustrates an integrated development tool chain for developing speech dialogs using a graphical user interface (GUI) 66. As an example, the StarRec© Dialog Development Studio (DDS) 66 may be employed for this purpose. The DDS 66 allows for interactively testing and debugging complied GDML dialogs in a cross-platform development environment.

Seamless migration to target platforms is achieved through the modular software architecture: the main DDS program uses TCP/IP-based inter-process communication for the exchange of messages and data between the single components (speech recognition, speech output, dialog management). These components are implemented in a hardware- and OS-independent manner and can thus be ported to any type of platform.

According to the embodiment of the inventive system illustrated in Figure 3 a Windows 2000 / NT operation system 62 is implemented on a X86 hardware platform 60. The block 64 includes basic components of the speech dialog system similar to the illustrative example of Figure 2.

The DDS / GUI 66 is connected by a TCP/IP connection to the dialog speech dialog system employing a host agent and a target agent 72. Besides the target agent 72 the DSS 66 comprises a debugging unit 68, a project configuration unit 70, a GDC compiler 74, a GDS compiler 76, which is a compiler for the standardized object orientated language ADA, and a unit for logging and testing 80. The DDS 66 also comprises databases for grammar, i.e. a Java Speech Grammar Format (JSGF) database 82, for the dialog development, i.e. a GDML database, and for logging 86.

The JSGF is a platform-independent, vendor-independent textual representation of grammars for general use in speech recognition which adopts the style and conventions of the Java programming language in addition to use of traditional grammar notations.

By means of the DDS 66, envisaged services not yet implemented in the actual speech dialog system may be simulated 88. Exchange of information is again provided by the GCF Message Router. For example, integration of a tuner 92 and a CD player 94 may be simulated. After the respective dialogs are successfully developed, real physical devices can be connected to and controlled by the speech dialog system.

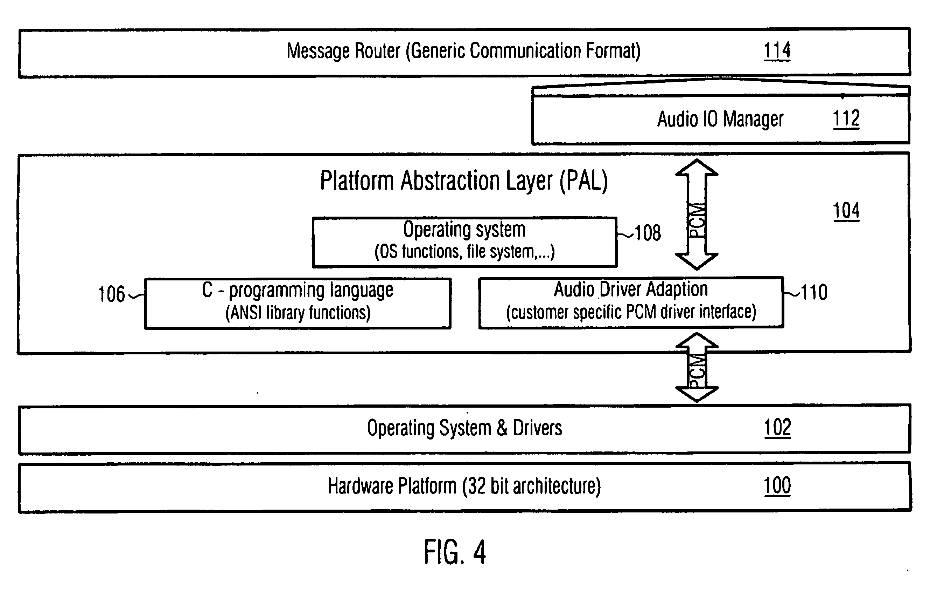

Figure 4 illustrates the adaptation of the speech dialog system according to the present invention to a customer specific pulse code modification (PCM) driver interface 110. PCM represents a common method for transferring analog information into digital signals by representing analog waveforms with a stream of digital bits (and vice versa). The PAL 104 allows for adaptation to particular specifications, as the bit representation of words, of the customer version of a PCM.

All dependencies of software components of the speech dialog system on customer devices, an audio device, are handled by the PAL 104. Adaptation to the target system is achieved by exclusively adapting the functions of the PAL 104 to the actual environment, in particular, the OS and drivers 102 implemented on some hardware platform 100.

The Audio IO Manager 112 represents a constituent of the kernel of the inventive speech dialog systems that is connected to the other service components (see, e.g., Figure 1) via the Message Router 114. Adaptation to a specific customer audio driver 110 is exclusively performed within the PAL 104 that also comprises OS functions and a file system management 108 as well as ANSI library functions providing the full scope of the C-programming language 106.

In terms of communication, the customer audio device driver may utilize some PCM and the PAL adapts this kind of PCM to the inherent PCM used for the data connection between the PAL and the Audio IO Manager 112 of the kernel of the speech dialog system.

All previously discussed embodiments are not intended as limitations but serve as examples illustrating features and advantages of the invention. It is to be understood that some or all of the above described features can also be combined in different ways and that the invention is defined solely by the appended claims.

## Claims

1. Speech dialog system, comprising
a Speech Application Manager (10; 26) for controlling the speech dialog system;
a Message Router (14, 28, 90);
at least two service components (12) of the speech dialog system comprising a speech recognition means (36) configured to recognize speech and a customer programmer's interface (46) configured to connect customer services to the Message Router (14; 28; 90) of the speech dialog system by mapping the data format employed by the Message (14; 28; 90) Router to a customer system application;
the Message Router (14; 28; 90) for providing data exchange between the at least two service components (12) with each other and with the Speech Application Manager (10; 26); and
a Platform Abstraction Layer (24) being an abstract singular and adaptable interface connecting the speech dialog system to a hardware platform (20; 60), an operating system (22; 62), a bus architecture and at least one device driver.

2. The speech dialog system according to claim 1, wherein the Message Router (14; 28; 90) uses one single Generic Communication Format to provide the data exchange.

3. The speech dialog system according to claim 1 or 2, wherein the at least two service components (12) comprise a voice detection means and/or a voice prompting means and/or a text synthesis means and/or a voice recorder (42) and/or a spell matcher and/or a configuration database and a debugging means and/or a Dialog Manager (30).

4. The speech dialog system according to one of the above claims, further comprising a development environment, in particular, for developing speech dialogs.

5. The speech dialog system according to claim 4, wherein the development environment comprises a graphical user interface (66).

6. The speech dialog system according to one of the above claims, further comprising a simulation environment (88) for simulating applications and/or devices actually run or controlled and/or planned to be run or controlled by the speech dialog system.

7. The speech dialog system according to one of the above claims, further comprising at least one application means.

8. Use of a speech dialog system according to one of the above claims in a vehicle.

9. Method for running a speech dialog system comprising at least two service components (12) that include a speech recognition means (36) configured to recognize speech and a customer programmes interface (46), the method comprising the steps of
controlling the speech dialog system by a Speech Application Manager (10; 26);
exchanging data between the service components (12) and between the service components (12) and the Speech Application Manager (10; 26) by a Message Router (14; 28; 90);
connecting the speech dialog system to a hardware platform (20; 60), an operating system (22; 62), a bus architecture and at least one device driver by a Platform Abstraction Layer (24) as an abstract singular and adaptable interface; and
connecting customer services by the customer programmer's interface to the Message Router (14; 28; 90) of the speech dialog system by mapping the data format employed by the Message (14; 28; 90) Router to a customer system application.

10. Method according to claim 9, wherein the data exchanged by the Message Router (14; 28; 90) is formatted in one single Generic Communication Format.

11. Method according to claim 9 or 10, further comprising
detecting and processing a speech signal;
generating output data on the basis of the analysis of the processed speech signal;
routing the output data to an application means to execute an application, and wherein
the routing is mediated by the Platform Abstraction Layer (24).

12. Method according to one of the claims claim 9 - 11, wherein the processing of the speech signal comprises converting the speech signal into a feature vector and/or speech recognizing and/or spell matching and/or speech recording.

13. Method according to one of the claims 9 12, wherein the output data comprises at least one synthesized speech signal output by the speech dialog system.

14. Method according to one of the claims 9 - 13, further comprising developing speech dialogs utilizing a development environment that represents one of the service components (12).

15. Method according to one of the claims 9 -14, further comprising
simulating applications and/or devices actually run or controlled and/or planned to be run or controlled by the speech dialog system utilizing a simulation environment that represents one of the service components (12).

16. Computer program product, comprising one or more computer readable media having computer-executable instructions adapted to perform each of the steps of the method according to one of the claims 9-15.

## Patentansprüche

1. Sprachdialogsystem, umfassend:
einen Sprachanwendungs-Manager (10, 26) zum Steuern des Sprachdialogsystems;
ein Mitteilungs-Router (14, 28, 90);
wenigstens zwei Service-Komponenten (12) des Sprachdialogsystems umfassend ein Spracherkennungsmittel (36), das konfiguriert ist, Sprache zu erkennen, und eine Kunden-Programmier-Schnittstelle (46), die konfiguriert ist, Kundenservices mit dem Mitteilungs-Router (14, 28, 90) des Sprachdialogsystems zu verbinden durch Abbilden des Datenformats, das der Mitteilungs-Router (14, 28, 90) verwendet, auf eine Kunden-System-Anwendung;
der Mitteilungs-Router (14, 28, 90) zum Bereitstellen von Datenaustausch zwischen den wenigstens zwei Service-Komponenten (12) miteinander und mit dem Sprachanwendungs-Manager (10, 26); und
eine Plattform-Abstraktions-Schicht (24) als eine abstrakte, singuläre und anpassbare Schnittstelle zum Verbinden des Sprachdialogsystems mit einer Hardware-Plattform (20, 60), einem Betriebssystem (22, 62), einer Bus-Architektur und wenigstens einem Gerätetreiber.

2. Das Sprachdialogsystem gemäß Anspruch 1, wobei der Mitteilungs-Router (14, 28, 90) ein einzelnes generisches Kommunikationsformat verwendet, um den Datenaustausch bereit zu stellen.

3. Das Sprachdialogsystem gemäß Ansprüchen 1 oder 2, wobei die wenigstens zwei Servicekomponenten (12) ein Stimmerkennungsmittel und/oder ein Sprachaufforderungsmittel und/oder ein Text-Synthesemittel und/oder einen Sprachrekorder (42) und/oder einen Rechtschreibungs-Überprüfer und/oder eine Konfigurationsdatenbank und Fehlererkennungsmittel und/oder einen Dialog-Manager (30) umfassen.

4. Das Sprachdialogsystem nach einem der vorangegangenen Ansprüche, weiterhin umfassend eine Entwicklungsumgebung, insbesondere zum Entwickeln von Sprachdialogen.

5. Das Sprachdialogsystem nach Anspruch 4, wobei die Entwicklungsumgebung eine graphische Benutzerschnittstelle (66) umfasst.

6. Das Sprachdialogsystem nach einem der vorherigen Ansprüche, weiterhin umfassend eine Simulationsumgebung (88) zum Simulieren von Anwendungen und/oder Geräten, die tatsächlich verwendet oder gesteuert werden und/oder deren Verwendung oder deren Steuerung geplant ist durch das Sprachdialogsystem.

7. Das Sprachdialogsystem nach einem der vorherigen Ansprüche, weiterhin wenigstens ein Anwendungsmittel umfassend.

8. Verwendung eines Sprachdialogsystems nach einem der vorherigen Ansprüche in einem Fahrzeug.

9. Verfahren zum Betreiben eines Sprachdialogsystem mit wenigstens zwei Service-Komponenten (12) die ein Spracherkennungsmittel (36) umfassen, das konfiguriert ist, Sprache zu erkennen, und mit einer Benutzer-Programmier-Schnittstelle (46); das Verfahren umfassend die Schritte:
Steuern des Sprachdialogsystems durch einen Sprachanwendungsmanger (10; 26);
Austauschen von Daten zwischen den Service-Komponenten und zwischen den Service-Komponenten und dem Sprachanwendungs-Manager (10, 26) durch einen Mitteilungs-Router (14, 28, 90);
Verbinden des Sprachdialogsystems mit einer Hardware-Plattform, einem Betriebssystem (22, 62), einer Bus-Architektur, und wenigstens einem Gerätetreiber durch eine Plattform-Abstraktions-Schicht (24) als eine abstrakte, singuläre und anpassbare Schnittstelle; und
Verbinden von Kundenservices mit der Benutzer-Programmier-Schnittstelle durch den Mitteilungs-Router (14, 28, 90) des Sprachdialogsystems durch Abbilden des Datenformats, dass der Mitteilungs-Router (14, 28, 90) verwendet, auf eine Kunden-System-Anwendung.

10. Verfahren nach Anspruch 9, wobei die Daten, die durch den Mitteilungs-Router (14, 28, 90) ausgetauscht werden, in einem einzigen generischen Kommunikationsformat formatiert sind.

11. Verfahren nach Ansprüchen 9 oder 10, weiterhin umfassend:
Detektieren und Verarbeiten eines Sprachsignals;
Erzeugen von Ausgabedaten auf der Grundlage der Analyse des verarbeiteten Sprachsignals;
Routen der Ausgabedaten an ein Anwendungsmittel, um eine Anwendung auszuführen, und wobei
das Routen durch die Plattform-Abstraktionsschicht (24) vermittelt wird.

12. Verfahren nach den Ansprüchen 9 - 11, wobei das Verarbeiten des Sprachsignals das Umwandeln des Sprachsignals in einen Merkmalsvektor umfasst und/oder Spracherkennen und/oder Rechtschreibungs-Überprüfen und/oder Sprachaufnehmen.

13. Verfahren nach einem der Ansprüche 9 - 12, wobei die Ausgabedaten wenigstens ein synthetisiertes Sprachsignal umfassen, das von dem Sprachdialogsystem ausgegeben wird.

14. Verfahren nach einem der Ansprüche 9 - 13, weiter umfassend
Entwickeln von Sprachdialogen durch Verwenden einer Entwicklungsumgebung, die eine der Service-Komponenten (12) repräsentiert.

15. Verfahren nach einem der Ansprüche 9 -14, weiterhin umfassend:
Simulieren von Anwendungen und/oder Geräten die tatsächlich verwendet oder gesteuert werden und/oder geplant sind, angewendet oder gesteuert zu werden durch das Sprachdialogsystem durch Verwenden einer Simulationsumgebung, die eine der Service-Komponenten (12) repräsentiert.

16. Ein Computerprogrammprodukt, umfassend ein oder mehrere lesbare Computermedien, die computer-ausführbare Instruktionen haben, geeignet um jeden der Schritte des Verfahrens nach einem der Ansprüche 9 -15 auszuführen.

## Revendications

1. Système de dialogue vocal, comprenant :
- un gestionnaire d'application vocale (10 ; 26) pour commander le système de dialogue vocal ;
- un routeur de message (14 ; 28 ; 90) ;
- au moins deux composants de service (12) du système de dialogue vocal comprenant un moyen de reconnaissance vocale (36) configuré pour reconnaître la parole et une interface client de programmeur (46) configurée pour connecter des services client au routeur de message (14 ; 28 ; 90) du système de dialogue vocal en mappant le format de données employé par le routeur de message (14 ; 28 ; 90) vers une application système de client ;
- le routeur de message (14 ; 28 ; 90) pour assurer un échange de données entre les au moins deux composants de service (12) les uns avec les autres et avec le gestionnaire d'application vocale (10 ; 26) ; et
- une couche d'abstraction de plate-forme (24) qui est une interface abstraite singulière et adaptable connectant le système de dialogue vocal à une plate-forme matérielle (20 ; 60), un système d'exploitation (22 ; 62), une architecture de bus et au moins un pilote de dispositif.

2. Système de dialogue vocal selon la revendication 1, dans lequel le routeur de message (14 ; 28 ; 90) utilise un unique format de communication générique pour assurer l'échange de données.

3. Système de dialogue vocal selon la revendication 1 ou 2, dans lequel les au moins deux composants de service (12) comprennent des moyens de détection de parole et/ou des moyens de sollicitation vocale et/ou des moyens de synthèse textuelle et/ou un enregistreur vocal (42) et/ou un dispositif de correspondance d'orthographe et/ou une base de données de configuration et des moyens de débogage et/ou un gestionnaire de dialogue (30).

4. Système de dialogue vocal selon l'une des revendications précédentes, comprenant en outre un environnement de développement, en particulier pour développer des dialogues vocaux.

5. Système de dialogue vocal selon la revendication 4, dans lequel l'environnement de développement comprend une interface graphique utilisateur (66).

6. Système de dialogue vocal selon l'une des revendications précédentes, comprenant en outre un environnement de simulation (88) pour simuler des applications et/ou des dispositifs réellement mis en oeuvre ou commandés et/ou prévus pour être mis en oeuvre ou commandés par le système de dialogue vocal.

7. Système de dialogue vocal selon l'une des revendications précédentes, comprenant en outre au moins un moyen d'application.

8. Utilisation d'un système de dialogue vocal selon l'une des revendications précédentes dans un véhicule.

9. Procédé de mise en oeuvre d'un système de dialogue vocal comprenant au moins deux composants de service (12) incluant un moyen de reconnaissance vocale (36) configuré pour reconnaître la parole et une interface client de programmeur (46), le procédé comprenant les étapes consistant à :
- commander le système de dialogue vocal par un gestionnaire d'application vocale (10; 26) ;
- échanger des données entre les composants de service (12) et entre les composants de service (12) et le gestionnaire d'application vocale (10 ; 26) par un routeur de message (14 ; 28 ; 90) ;
- connecter le système de dialogue vocal à une plate-forme matérielle (20 ; 60), un système d'exploitation (22 ; 62), une architecture de bus et au moins un pilote de dispositif par une couche d'abstraction de plate-forme (24) en tant qu'interface abstraite singulière et adaptable ; et
- connecter des services client par l'interface client de programmeur au routeur de message (14 ; 28 ; 90) du système de dialogue vocal en mappant le format de données employé par le routeur de message (14 ; 28 ; 90) vers une application système de client.

10. Procédé selon la revendication 9, pour lequel les données échangées par le routeur de message (14 ; 28 ; 90) sont formatées en un unique format de communication générique.

11. Procédé selon la revendication 9 ou 10, comprenant en outre les étapes consistant à :
- détecter et traiter un signal vocal;
- générer des données de sortie en fonction de l'analyse du signal vocal traité ;
- router les données de sortie vers un moyen d'application pour exécuter une application, et dans lequel
- le routage est effectué sous la médiation de la couche d'abstraction de plate-forme (24).

12. Procédé selon l'une des revendications 9 à 11, dans lequel le traitement du signal vocal comprend une conversion du signal vocal en un vecteur de caractéristique et/ou une reconnaissance vocale et/ou une correspondance d'orthographe et/ou un enregistrement vocal.

13. Procédé selon l'une des revendications 9 à 12, dans lequel les données de sortie comprennent au moins un signal vocal synthétisé délivré en sortie par le système de dialogue vocal.

14. Procédé selon l'une des revendications 9 à 13, comprenant en outre une étape consistant à :
- développer des dialogues vocaux en utilisant un environnement de développement représentant un des composants de service (12).

15. Procédé selon l'une des revendications 9 à 14, comprenant en outre une étape consistant à :
- simuler des applications et/ou des dispositifs réellement mis en oeuvre ou commandés et/ou prévus pour être mis en oeuvre ou commandés par le système de dialogue vocal en utilisant un environnement de simulation représentant un des composants de service (12).

16. Produit logiciel informatique, comprenant un ou plusieurs supports lisibles par un ordinateur comportant des instructions exécutables par un ordinateur, adaptées à mettre en oeuvre chacune des étapes du procédé selon l'une des revendications 9 à 15.
